# EUROPÄISCHE PATENTSCHRIFT

(11) **EP 3 727 074 B1**
(45) Veröffentlichungstag und Bekanntmachung des Hinweises auf die Patenterteilung: **06.04.2022**
(21) Anmeldenummer: 18833821.4
(22) Anmeldetag: 21.12.2018
(51) Int. Cl.: A44C 27/00, A44C 15/00

(54) **VERFAHREN ZUM BEHANDELN EINES PORÖSEN SCHMUCKSTÜCKS UND VORRICHTUNG ZUR HERSTELLUNG EINER FLÜSSIGEN LÖSUNG ZUM BEHANDELN EINES PORÖSEN SCHMUCKSTÜCKS**
METHOD FOR TREATING A POROUS PIECE OF JEWELLERY AND DEVICE FOR PRODUCING A LIQUID SOLUTION FOR TREATING A POROUS PIECE OF JEWELLERY
PROCÉDÉ DE TRAITEMENT D'UN BIJOU POREUX ET DISPOSITIF DE PRÉPARATION D'UNE SOLUTION LIQUIDE DE TRAITEMENT D'UN BIJOU POREUX

(30) Priorität: 22.12.2017 AT 510772017
(43) Veröffentlichungstag der Anmeldung: 28.10.2020
(73) Patentinhaber: Innotech Holding GmbH, 4656 Kirchham (AT)
(72) Erfinder: REITER, Gerald, 4694 Ohlsdorf (AT)
(74) Vertreter: Hübscher & Partner Patentanwälte GmbH
(86) Internationale Anmeldenummer: PCT/AT2018/050025
(87) Internationale Veröffentlichungsnummer: WO 2019/118994

(56) Entgegenhaltungen:
- EP-A1- 2 813 158
- WO-A1-2015/138951

## Beschreibung

### Technisches Gebiet

Die Erfindung bezieht sich auf ein Verfahren zum Behandeln eines porösen Schmuckstücks, das mit einer flüssigen Lösung imprägniert wird, sowie auf eine Vorrichtung zur Herstellung einer flüssigen Lösung zum Behandeln eines porösen Schmuckstücks.

### Stand der Technik

Bei Schmuckstücken mit einem porösen Formkörper, insbesondere aus einem keramischen Werkstoff, ist es bekannt (EP 2 813 158 B1, DE 298 12 379 U1), den Formkörper mit flüssigen Duftstoffen zu imprägnieren, um den Duftstoff über eine längere Zeitspanne abgeben zu können. Diese Imprägnierung mit einem Duftstoff lässt zwar eine Unterscheidung dieses Schmuckstücks von formengleichen Schmuckstücken ohne Imprägnierung oder mit einer unterschiedlichen Imprägnierung zu, doch kann mit einer solchen Duftstoffimprägnierung keine auf ein bestimmtes Lebewesen bezogene Unverwechselbarkeit hergestellt werden, wie sie für Schmuckstücke häufig gewünscht wird, um mit einem solchen Schmuckstück einen eindeutigen Bezug zu einer Person oder einem Tier sicherstellen zu können.

### Darstellung der Erfindung

Der Erfindung liegt somit die Aufgabe zugrunde, ein Schmuckstück derart zu behandeln, dass eine eindeutige Beziehung zur einem Lebewesen hergestellt werden kann, dass also das Schmuckstück mit einer nicht frei wählbare, von der Natur einer Person oder eines Tieres abhängige Kennung versehen werden kann.

Ausgehend von einem Verfahren der eingangs geschilderten Art löst die Erfindung die gestellte Aufgabe dadurch, dass biogenes Material eines Lebewesens in einem Säurebad gelöst und die Lösung neutralisiert wird, bevor das poröse Schmuckstück mit der neutralisierten Lösung imprägniert wird.

Durch den Einsatz biogener Materialien wird ein eindeutiger, unverwechselbarer Bezug zu dem Lebewesen hergestellt, von dem das eingesetzte biogene Material stammt. Es muss lediglich sichergestellt werden, dass zumindest ein Teil der individualisierenden Merkmale in einer für eine Imprägnierung des zu behandelnden Schmuckstücks geeigneten Lösung bereitgestellt werden, und zwar in einer umweltfreundlichen Form. Dies gelingt in einfacher Weise dadurch, dass das biogene Material zunächst in einem Säurebad gelöst wird, bevor die Lösung mit einem geeigneten Neutralisierungsmittel auf einen neutralen pH-Wert eingestellt wird. Mithilfe der gewonnenen, biogene Informationen des Bezuglebewesens enthaltenden, neutralisierten Lösung kann dann das Schmuckstück zur Individualisierung imprägniert werden, wobei die Kapillarwirkung der porösen Struktur des Schmuckstücks, das vorzugsweise aus einem keramischen Werkstoff, z. B. Porzellan, gefertigt ist, die Imprägnierung erleichtert, selbst bei einer Emailbeschichtung, weil für die Imprägnierung lediglich eine kleine Bohrung durch die Emailschicht vorhanden sein muss.

Wird die Säurekonzentration der Lösung durch Zugabe von Wasser verringert, ergeben sich verbesserte Ausgangsbedingungen für die nachfolgende Neutralisierung der Lösung durch die Zugabe eines Neutralisierungsmittels.

Als Neutralisierungsmittel können unterschiedliche, feste wie auch flüssige Stoffe eingesetzt werden. Als feste Neutralisierungsmittel kommen insbesondere Salze mit neutralisierender Wirkung in Frage, beispielsweise (Hydrogen)Carbonate, Acetate, Nitrite, (Hydrogen)Phosphate, Hydrogensulfate, wobei der Einsatz von Carbonaten hierfür besonders geeignet ist.

Als flüssige Neutralisierungsmittel können basische Laugen, insbesondere auf der Basis von NaOH, zum Einsatz kommen.

Um die Reaktionsbedingungen im Säurebad zu verbessern, kann das biogene Material in einem erwärmten Säurebad gelöst werden. Als biogenes Material kommen wegen der einfachen Verfügbarkeit insbesondere Haare in Betracht. Es kann aber selbstverständlich auch anderes biogenes Material zur Bereitstellung individualisierender biogener Informationen zum Einsatz kommen.

Um eine geeignete Lösung biogenen Materials zum Imprägnieren eines porösen Schmuckstücks zu erhalten, kann eine Vorrichtung eingesetzt werden, die sich dadurch auszeichnet, dass ein Gehäuse vorgesehen ist, das eine Reaktionskammer, eine ein Säurebehältnis aufnehmende Säurekammer und eine Carbonatkammer bildet und die Reaktionskammer mit der Säure- und der Carbonatkammer verbindende Durchtritte aufweist, dass das Gehäuse einen drehbar gelagerten Deckel mit einer Eintragsöffnung für biogenes Material umfasst, die in einer Ausgangsstellung des Deckels in die Reaktionskammer mündet, dass der Deckel einen in das Gehäuse ragenden Schaltansatz aufweist, der in einer auf die Ausgangsstellung folgenden ersten Drehstellung das Säurebehältnis öffnet und in einer zweiten nachfolgenden Drehstellung den Durchtritt zwischen der Reaktionskammer und der Carbonatkammer freigibt, und dass in einer Endstellung eine Ausgießöffnung des Deckels an einen von der Reaktionskammer ausgehenden, mit einem Filter versehenen Austragskanal des Gehäuses anschließt.

Eine solche Vorrichtung erlaubt eine weitgehend automatisierte Bereitstellung einer Lösung aus biogenem Material zum Imprägnieren eines porösen Schmuckstücks, weil nach dem Einbringen des biogenen Materials in einer vorgegebenen Menge der Deckel des Gehäuses lediglich schrittweise gedreht werden muss, um zunächst das in die Reaktionskammer eingebrachte biogene Material in einem Säurebad zu lösen, das aus der Säurekammer zufolge eines Öffnens des Säurebehältnisses durch den Schaltansatz beim Drehen des Deckels in die Reaktionskammer gelangt. Nach dem Lösen des biogenen Materials wird durch ein Weiterdrehen des Deckels in der zweiten Drehstellung der Weg zwischen der Carbonatkammer und der Reaktionskammer freigegeben, sodass das in der Carbonatkammer gespeicherte Carbonat in die Lösung gelangt und für eine Neutralisierung der Lösung sorgt. Die neutralisierte Lösung des biogenen Materials kann dann in einer Endstellung des Deckels durch einen Austragskanal in die Ausgießöffnung des Deckels gelangen, wobei durch ein vorgeschaltetes Filter allfällige Feststoffanteile zurückgehalten werden.

Weist das Gehäuse eine Wasserkammer auf, wobei der Schaltansatz vor Erreichen der zweiten Drehstellung des Deckels einen Strömungsweg zwischen der Wasserkammer und dem Reaktionsraum freigibt, so kann die Säurekonzentration der Lösung des biogenen Materials verringert und die anschließende Neutralisierung erleichtert werden.

Damit die Drehung des Deckels zwischen den einzelnen vorgegebenen Drehstellungen konstruktiv festgelegt werden kann, kann das Gehäuse einen die einzelnen Drehstellungen des Deckels vorgebenden Schaltnocken aufweisen. Nach jedem Drehschritt muss demnach der Schaltnocken betätigt werden, um den Deckel in die nächste Drehstellung drehen zu können, wodurch die vorgegebene Abfolge der einzelnen Arbeitsschritte gesichert werden kann.

Damit die Reaktionsvoraussetzungen zum Lösen des biogenen Materials im Säurebad verbessert werden können, kann die Reaktionskammer mit einer Heizeinrichtung versehen werden.

Schließlich kann zur Sicherung der Neutralisation der Lösung der Austragskanal eine dem Filter vorgelagerte Carbonataufnahme aufweisen, sodass beim Ausgießen der gewonnenen Lösung des biogenen Materials diese Lösung noch einmal über ein Neutralisierungsmittel fließt.

### Kurze Beschreibung der Erfindung

In der Zeichnung ist der Erfindungsgegenstand beispielsweise dargestellt. Es zeigen
- Fig. 1: einen Vertikalschnitt durch eine erfindungsgemäße Vorrichtung zur Herstellung einer flüssigen Lösung in der Ausgangsstellung,
- Fig. 2: diese Vorrichtung in einer Draufsicht bei abgenommenem Deckel,
- Fig. 3: einen Schnitt nach der Linie III-III der Fig. 1, jedoch in einer Drehstellung des Deckels zwischen der Ausgangsstellung und einer ersten Drehstellung,
- Fig. 4: einen Schnitt nach der Linie IV-IV der Fig. 2, jedoch in einer zweiten Drehstellung des Deckels und
- Fig. 5: einen Schnitt nach der Linie V-V der Fig. 2 mit dem in der Endstellung befindlichen Deckel.

### Wege zur Ausführung der Erfindung

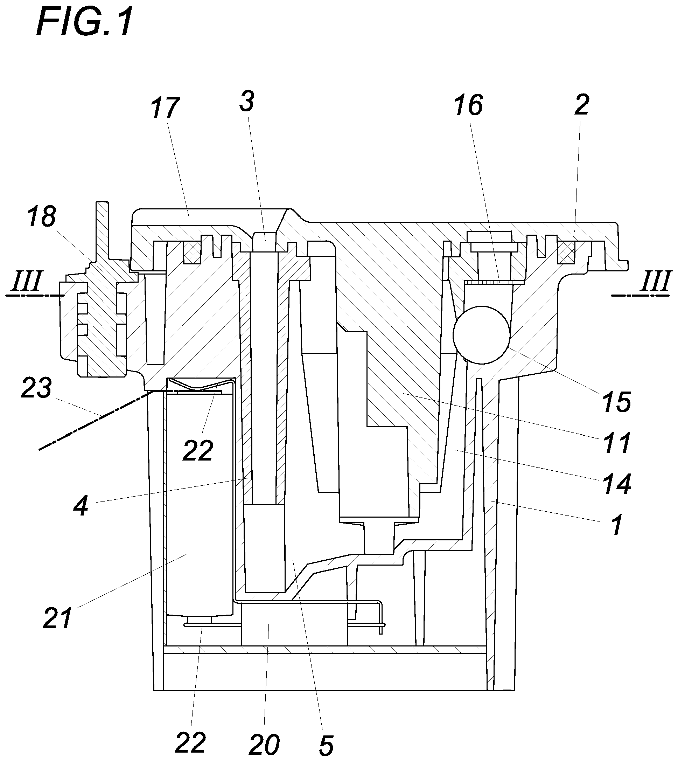

Die dargestellte Vorrichtung weist ein Gehäuse 1 mit einem drehbar im Gehäuse 1 gehaltenen Deckel 2 auf, der mit einer Eintragsöffnung 3 für ein biogenes Material, insbesondere Haare, versehen ist. In der in der Fig. 1 dargestellten Ausgangsstellung des Deckels 2 wird die Eintragsöffnung 3 über einen gehäusefesten Eintragskanal 4 mit einer Reaktionskammer 5 im Bodenbereich des Gehäuses 1 verbunden.

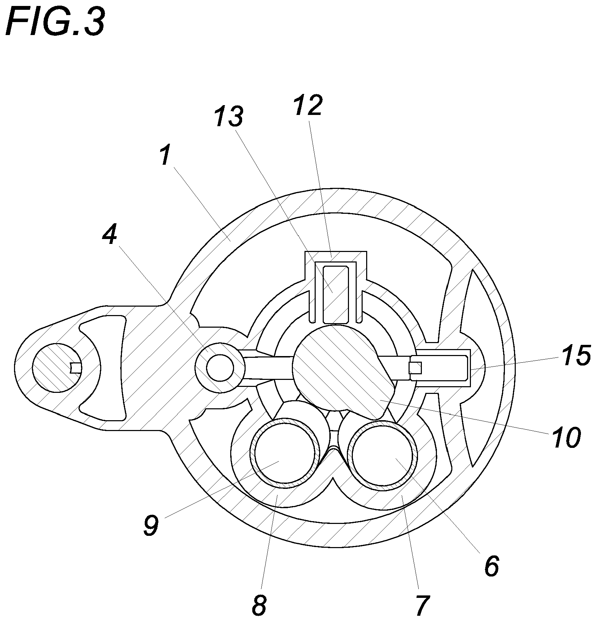

Das Gehäuse 1 weist eine ein Säurebehältnis 6 aufnehmende Säurekammer 7 und eine dieser Säurekammer 7 gegenüber winkelversetzte Wasserkammer 8 auf, in die ein Wasserbehältnis 9 eingesetzt ist, das wie das Säurebehältnis 6 durch einen Brechansatz 10 geöffnet werden kann, der an einem in das Gehäuse 1 ragenden Schaltansatz 11 des Deckels 2 vorgesehen ist, wie dies insbesondere die Fig. 3 zeigt. Den Säure- und Wasserkammern 7 und 8 liegt in Bezug auf die Drehachse des Deckels 2 eine Carbonatkammer 12 gegenüber, die eine Carbonattablette 13 aufnimmt. Die Säurekammer 7, die Wasserkammer 8 sowie die Carbonatkammer 12 sind jeweils über entsprechende Durchtritte mit der Reaktionskammer 5 verbunden.

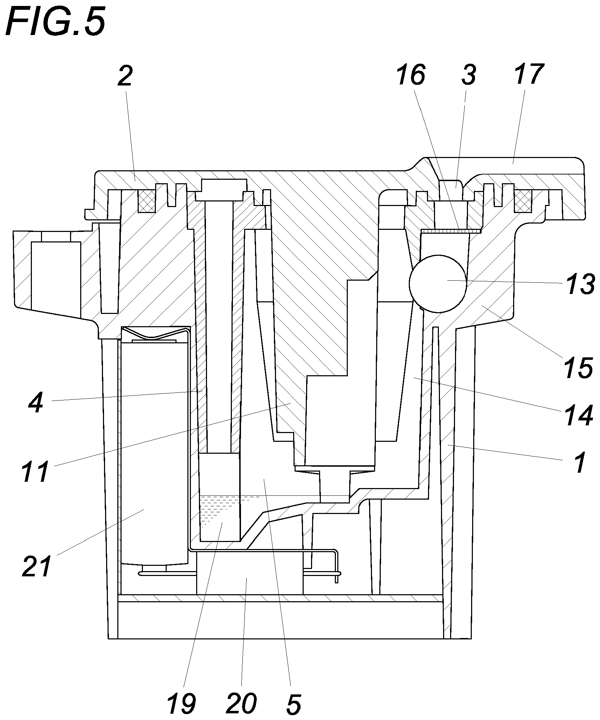

Von der Reaktionskammer 5 des Gehäuses 1 führt ein Austragskanal 14 zu einer Carbonataufnahme 15, die ausgangsseitig gegenüber dem Deckel 2 durch ein Filter 16 abgeschlossen ist. In der in der Fig. 5 dargestellten Endstellung des Deckels 2 schließt die mit einer Ausgießöffnung 17 des Deckels 2 zusammenfallende Eintragsöffnung 3 an das Filter 16 an.

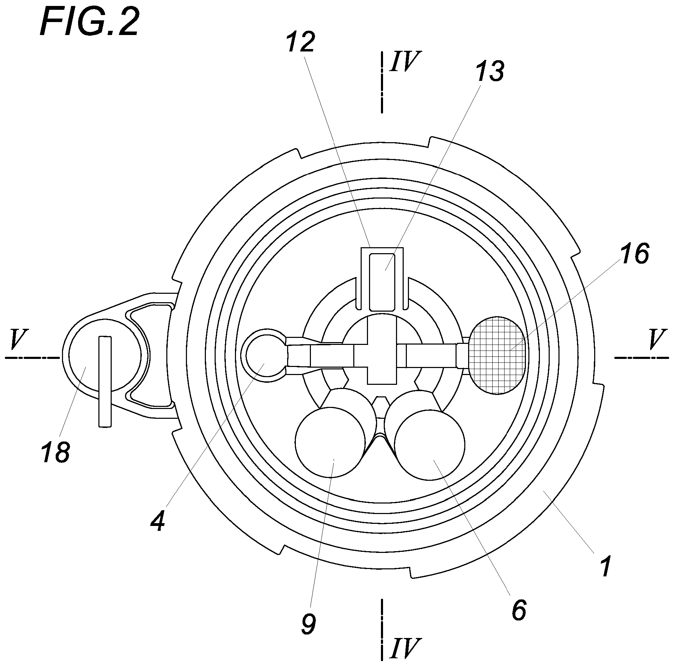

Die Drehstellungen des Deckels 2 sind konstruktiv durch einen Schaltnocken 18 vorgegeben, der für die einzelnen Drehstellungen des Deckels 2 Anschläge bildet. In der Ausgangsstellung gemäß den Fig. 1 und 2 kann somit biogenes Material durch den Eintragskanal 4 in die Reaktionskammer 5 eingebracht werden. Der Schaltansatz 11 des Deckels 2 schließt in dieser Drehstellung die Carbonatkammer 12 gegenüber der Reaktionskammer 5 ab. Wird der Deckel 2 und damit der Schaltansatz 11 nach einer Betätigung des Schaltnockens 18 um 90 °C in eine erste Drehstellung gedreht, so wird gemäß der Fig. 3 das gläserne Säurebehältnis 6 durch den Brechansatz 10 vor dem Erreichen der ersten Drehstellung gebrochen, sodass die Säure aus dem Säurebehältnis 6 in die Reaktionskammer 5 fließt.

Das sich in der Reaktionskammer 5 sammelnde Säurebad 19 kann über eine im Bodenbereich der Reaktionskammer 5 vorgesehene Heizeinrichtung 20 beheizt werden, die von einer Batterie 21 gespeist wird. Einer der beiden Batteriekontakte 22 ist gemäß der Fig. 1 durch einen elektrisch isolierenden Abzugsstreifen 23 abgedeckt, sodass die Heizeinrichtung 20 durch ein Abziehen des Abzugstreifens 23 eingeschaltet wird.

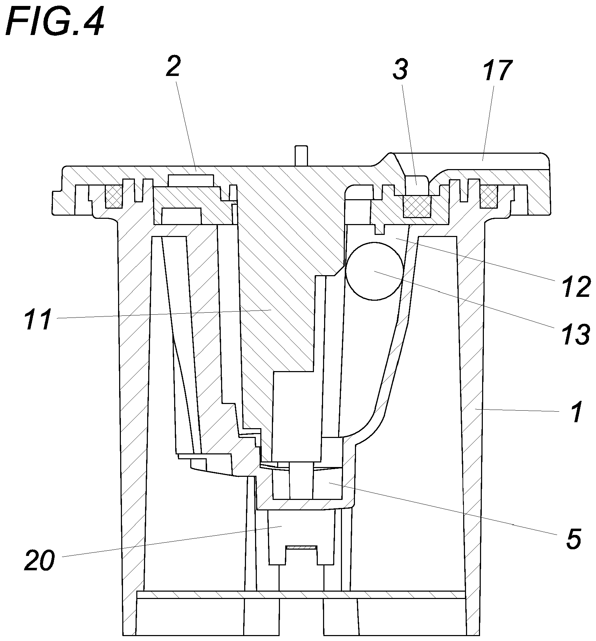

Nach dem Lösen des biogenen Materials im Säurebad 19, was durch eine Temperaturanzeige ersichtlich gemacht werden kann, wird nach einem Weiterschalten des Schaltnockens 18 der Deckel 2 in eine zweite Drehstellung um 90 °C gedreht, die in der Fig. 4 veranschaulicht ist. Während dieser Drehverstellung wird das Wasserbehältnis 9 durch den Brechansatz 10 des Schaltansatzes 11 geöffnet, sodass dem Säurebad 19 Wasser zugegeben wird, bevor in der zweiten Drehstellung die Carbonatkammer 12 durch den Schaltansatz 11 freigegeben wird und die in der Carbonatkammer 12 aufgenommene Carbonattablette 13 in das Säurebad 19 fällt. Die Anordnung ist dabei so getroffen, dass durch die Drehung des Deckels 2 in die zweite Drehstellung die Carbonattablette 13 zerkleinert wird, um die Neutralisierungsreaktion zu beschleunigen.

Nach der Neutralisierung der Lösung des biogenen Materials wird nach einer neuerlichen Drehung des Deckels 2 in die Endstellung nach der Fig. 5 der Austragskanal 14 mit der Ausgießöffnung 17 des Deckels 2 verbunden, sodass bei einem Kippen des Gehäuses 1 die neutralisierte Lösung des biogenen Materials über die in der Carbonataufnahme 15 gehaltene Carbonattablette 13 durch das Filter 16 in die Ausgießöffnung 17 fließt und zum Imprägnieren eines porösen Schmuckstücks bereitsteht.

Zur Lösung einer Haarlocke wird beispielsweise eine 32%ige Salpetersäure in einer Menge von 0,7 ml eingesetzt, wobei dem auf 85 °C erwärmten Säurebad 19 Wasser in einer Menge von 4 ml zur Verdünnung der Säurekonzentration zugeführt wird. Zur Neutralisierung wird vorzugsweise ein Calziumcarbonat eingesetzt, und zwar in Form einer Tablette von 1000 mg. Mithilfe der auf diese Weise gewonnenen biogenen Lösung kann beispielsweise eine Porzellanperle imprägniert werden, indem die neutralisierte Lösung in die für das Fädeln der Perle vorgesehene Durchgangsöffnung eingebracht wird. Durch Kapillarwirkung verteilt sich die Lösung über das Perlenvolumen.

## Patentansprüche

1. Verfahren zum Behandeln eines porösen Schmuckstücks, das mit einer flüssigen Lösung imprägniert wird, **dadurch gekennzeichnet, dass** biogenes Material eines Lebewesens in einem Säurebad (19) gelöst und die Lösung neutralisiert wird, bevor das poröse Schmuckstück mit der neutralisierten Lösung imprägniert wird.

2. Verfahren nach Anspruch 1, **dadurch gekennzeichnet, dass** die Säurekonzentration der Lösung des biogenen Materials vor der Neutralisierung durch Zugabe von Wasser verringert wird.

3. Verfahren nach Anspruch 1 oder 2, **dadurch gekennzeichnet, dass** der Lösung ein Carbonat als Neutralisierungsmittel zugegeben wird.

4. Verfahren nach einem der Ansprüche 1 bis 3, **dadurch gekennzeichnet, dass** das biogene Material in einem erwärmten Säurebad (19) gelöst wird.

5. Verfahren nach einem der Ansprüche 1 bis 4, **dadurch gekennzeichnet, dass** als biogenes Material Haare eingesetzt werden.

6. Vorrichtung zur Herstellung einer flüssigen Lösung zum Behandeln eines porösen Schmuckstücks, **dadurch gekennzeichnet, dass** ein Gehäuse (1) vorgesehen ist, das eine Reaktionskammer (5), eine ein Säurebehältnis (8) aufnehmende Säurekammer (7) und eine Carbonatkammer (7, 12) bildet und die Reaktionskammer (5) mit der Säure- und der Carbonatkammer (12) verbindende Durchtritte aufweist, dass das Gehäuse (1) einen drehbar gelagerten Deckel (2) mit einer Eintragsöffnung (3) für biogenes Material umfasst, die in einer Ausgangsstellung des Deckels (2) in die Reaktionskammer (5) mündet, dass der Deckel (2) einen in das Gehäuse (1) ragenden Schaltansatz (11) aufweist, der in einer auf die Ausgangsstellung folgenden ersten Drehstellung das Säurebehältnis (6) öffnet und in einer zweiten nachfolgenden Drehstellung den Durchtritt zwischen der Reaktionskammer (5) und der Carbonatkammer (12) freigibt, und dass in einer Endstellung eine Ausgießöffnung (17) des Deckels (2) an einen von der Reaktionskammer (5) ausgehenden, mit einem Filter (16) versehenen Austragskanal (14) des Gehäuses (1) anschließt.

7. Vorrichtung nach Anspruch 6, **dadurch gekennzeichnet, dass** das Gehäuse (1) eine Wasserkammer (8) aufweist und dass der Schaltansatz (11) vor Erreichen der zweiten Drehstellung des Deckels (2) einen Strömungsweg zwischen der Wasserkammer (8) und dem Reaktionsraum freigibt.

8. Vorrichtung nach Anspruch 6 oder 7, **dadurch gekennzeichnet, dass** das Gehäuse (1) einen die einzelnen Drehstellungen des Deckels (2) vorgebenden Schaltnocken (18) aufweist.

9. Vorrichtung nach einem der Ansprüche 6 bis 8, **dadurch gekennzeichnet, dass** die Reaktionskammer (5) mit einer Heizeinrichtung (20) versehen ist.

10. Vorrichtung nach einem der Ansprüche 6 bis 9, **dadurch gekennzeichnet, dass** der Austragskanal (14) eine dem Filter (16) vorgelagerte Carbonataufnahme (15) aufweist.

## Claims

1. Method for treating a porous piece of jewellery which is impregnated with a liquid solution, **characterised in that** biogenic material of a living being is dissolved in an acid bath (19) and the solution is neutralised before the porous piece of jewellery is impregnated with the neutralised solution.

2. Method as claimed in claim 1, **characterised in that** the acid concentration of the solution of the biogenic material before neutralisation is reduced by adding water.

3. Method as claimed in claim 1 or 2, **characterised in that** a carbonate is added to the solution as a neutralising agent.

4. Method as claimed in any one of claims 1 to 3, **characterised in that** the biogenic material is dissolved in a heated acid bath (19).

5. Method as claimed in any one of claims 1 to 4, **characterised in that** hair is used as biogenic material.

6. Device for producing a liquid solution for treating a porous piece of jewellery, **characterised in that** a housing (1) is provided which forms a reaction chamber (5), an acid chamber (7), which accommodates an acid container (8), and a carbonate chamber (7, 12) and has passages connecting the reaction chamber (5) to the acid chamber and carbonate chamber (12), **in that** the housing (1) comprises a rotatably mounted cover (2) with an inlet opening (3) for biogenic material which, in an initial position of the cover (2), opens into the reaction chamber (5), **in that** the cover (2) has a switching attachment (11) protruding into the housing (1), said switching attachment opening the acid container (6) in a first rotational position following the initial position and clearing the passage between the reaction chamber (5) and the carbonate chamber (12) in a second subsequent rotational position, and **in that**, in an end position, a pouring opening (17) of the cover (2) adjoins a discharge channel (14) of the housing (1) which starts from the reaction chamber (5) and is provided with a filter (16).

7. Device as claimed in claim 6, **characterised in that** the housing (1) has a water chamber (8) and **in that** the switching attachment (11) clears a flow path between the water chamber (8) and the reaction chamber before reaching the second rotational position of the cover (2).

8. Device as claimed in claim 6 or 7, **characterised in that** the housing (1) has a switching cam (18) which specifies the individual rotational positions of the cover (2).

9. Device as claimed in any one of claims 6 to 8, **characterised in that** the reaction chamber (5) is provided with a heating device (20).

10. Device as claimed in any one of claims 6 to 9, **characterised in that** the discharge channel (14) has a carbonate receptacle (15) positioned upstream of the filter (16).

## Revendications

1. Procédé de traitement d'un bijou poreux qui est imprégné d'une solution liquide, **caractérisé en ce qu'**un matériau biogène d'un être vivant est dissous dans un bain acide (19) et la solution est neutralisée avant que le bijou poreux ne soit imprégné de la solution neutralisée.

2. Procédé selon la revendication 1, **caractérisé en ce que** la concentration d'acide de la solution du matériau biogène est réduire avant la neutralisation par l'ajout d'eau.

3. Procédé selon la revendication 1 ou 2, **caractérisé en ce qu'**à la solution est ajouté un carbonate en guise de moyen de neutralisation.

4. Procédé selon une des revendications 1 à 3, **caractérisé en ce que** le matériau biogène est dissous dans un bain acide (19) chauffé.

5. Procédé selon une des revendications 1 à 4, **caractérisé en ce que** des cheveux sont utilisés en guise de matériau biogène.

6. Dispositif de préparation d'une solution liquide pour le traitement d'un bijou poreux, **caractérisé en ce qu'**il est prévu un boîtier (1) qui forme une chambre de réaction (5), une chambre à acide (7) contenant un récipient d'acide (8) et une chambre à carbonate (7, 12) et comporte des passages reliant la chambre de réaction (5) à la chambre à acide et à carbonate (12), que le boîtier (1) comprend un couvercle (2) monté de manière rotative avec un orifice d'admission (3) pour le matériau biogène qui débouche, dans une position de départ du couvercle (2), dans la chambre de réaction (5), que le couvercle (2) comporte un élément de commutation (11) saillant dans le boîtier (1) qui, dans une première position de rotation suivant la position de départ, ouvre le récipient d'acide (6) et, dans une deuxième position de rotation située derrière, libère le passage entre la chambre de réaction (5) et la chambre à carbonate, et que, dans une position finale, un orifice d'écoulement (17) du couvercle (2) se raccorde à un canal d'évacuation (14) du boîtier (1) muni d'un filtre (16) sortant de la chambre de réaction (5).

7. Dispositif selon la revendication 6, **caractérisé en ce que** le boîtier (1) comporte une chambre à eau (8) et que l'élément de commutation (11) libère un chemin d'écoulement entre la chambre à eau (8) et la chambre de réaction avant d'atteindre la deuxième position de rotation du couvercle (2).

8. Dispositif selon la revendication 6 ou 7, **caractérisé en ce que** le boîtier (1) comporte une came de commutation (18) définissant les différentes positions de rotation du couvercle (2).

9. Dispositif selon une des revendications 6 à 8, **caractérisé en ce que** la chambre de réaction (5) est dotée d'un dispositif de chauffage (20).

10. Dispositif selon une des revendications 6 à 9, **caractérisé en ce que** le canal d'évacuation (14) comporte un réceptacle de carbonate (15) disposé en amont du filtre (16).
